# EUROPÄISCHE PATENTSCHRIFT

(11) **EP 2 114 613 B1**
(45) Veröffentlichungstag und Bekanntmachung des Hinweises auf die Patenterteilung: **15.08.2012**
(21) Anmeldenummer: 07856446.5
(22) Anmeldetag: 07.12.2007
(51) Int. Cl.: B23K 26/02

(54) **ROBOTERTAUGLICHE BEARBEITUNGSEINRICHTUNG**
ROBOT-COMPATIBLE MACHINING DEVICE
DISPOSITIF D'USINAGE ROBOTISABLE

(30) Priorität: 08.01.2007 DE 202007000505 U
(43) Veröffentlichungstag der Anmeldung: 11.11.2009
(73) Patentinhaber: KUKA Systems GmbH, 86165 Augsburg (DE)
(72) Erfinder: HÖLSCHER, Manfred, 86473 Ziemetshausen (DE); HENNEKE, Thomas, 86971 Peiting (DE)
(74) Vertreter: Ernicke, Klaus Stefan
(86) Internationale Anmeldenummer: PCT/EP2007/010641
(87) Internationale Veröffentlichungsnummer: WO 2008/083798

(56) Entgegenhaltungen:
- DE-U1- 20 103 411
- DE-U1- 29 606 375
- JP-A- 9 085 452
- US-B1- 6 198 065

## Beschreibung

Die Erfindung betrifft eine robotertaugliche Bearbeitungseinrichtung mit den Merkmalen im Oberbegriff des Hauptanspruchs.

Eine derartige Bearbeitungseinrichtung in Form einer Laserschweißeinrichtung aus der DE-U-29606375, der WO 97/37808 A, der DE 201 03 411 U1 und der DE 201 11 394 U1 bekannt. Die Laserschweißeinrichtung besteht in diesen Fällen jeweils aus einem Laserschweißkopf und einer Andrückvorrichtung mit ein oder mehreren Andrückelementen, z.B. einer Andrückrolle oder einem Andrückfinger und einer Zustellvorrichtung, die einen Stellantrieb aufweist. Über die Zustellvorrichtung und den Stellantrieb wird das Andrückelement gegen das zu bearbeitende Werkstück gedrückt, wobei unabhängig von der Roboterbewegung eventuelle Toleranzen in den Werkstücken durch die Andrückvorrichtung ausgeglichen und der Druckkontakt mit der eingestellten Andrückkraft aufrecht erhalten wird. Beim Andrücken und bei evtl. Nachsetzbewegungen wird auch der Laserschweißkopf mitgeführt und der eingestellte Arbeitsabstand eingehalten. Bei den vorbekannten Bearbeitungseinrichtungen besteht der Stellantrieb aus einem konventionellen Pneumatikzylinder mit einer zum Andrücken und Nachsetzen ausfahrbaren Kolbenstange.

Derartige Pneumatikzylinder besitzen eine Krafthysterese, d.h. die wirkende Andruckkraft ist abhängig von der Bewegungsrichtung des Zylinders. Hierbei können Kraftdifferenzen von bis zu 70 N entstehen. Dies hat zur Folge, dass die minimale Andruckkraft deutlich oberhalb von dieser Kraftdifferenz liegen muss, um gleichmäßig reproduzierbare Andruckbedingen zu erhalten. Außerdem kann die Andruckkraft nur relativ ungenau dosiert und eingehalten werden. Gerade bei Lasernahtschweißungen an Fahrzeugrohkarosserien, z.B. im Dachbereich, kommt es hierbei zu Qualitätseinbußen, da mit der Andruckkraft der Ausgasungsspalt im Bereich von wenigen Zehntel Millimeter eingestellt werden muss. Wegen der vorerwähnten Krafthysterese ist dieses aber nur bedingt möglich.

Auf dem Markt sind pneumatische Zylinder mit einer reduzierten Krafthysterese verfügbar, die jedoch eine silikonhaltige Schmierung besitzen und wegen der damit verbundenen Leckageverlaste in vielen Bereichen nicht einsetzbar sind. Insbesondere im Automobilbau besteht das Problem, dass bereits winzige Mengen des austretenden silikonhaltigen Schmiermittels das Blechbauteil verunreinigen, was bei der späteren Lackierung zu großen Problemen wegen einer ungleichmäßigen Lackannahme führt.

In der Praxis ist es ferner bekannt, anstelle der pneumatischen Zylinder servomotorische Antriebe einzusetzen. Diese Antriebe bedingen allerdings einen deutlich gesteigerten Bau- und Kostenaufwand und brauchen relativ viel Platz. Zudem sind sie anfälliger gegenüber Störungen als Pneumatikzylinder und haben auch nicht das gleiche schnelle Ansprechverhalten.

Aus der JP 09-085 452 A ist eine Rollnahtschweißvorrichtung bekannt, die einen stationären Rollenschweißkopf und eine daneben angeordnete bewegliche Zustellvorrichtung für die an einem Flansch zu verschweißenden Werkstücke aufweist. Die Zustellvorrichtung besitzt eine Schwenkeinrichtung mit einer Spanneinrichtung zum Führen und Einspannen des Werkstücks. Die Spanneinrichtung weist einen Rollenmembranzylinder mit einem Spannkopf auf.

Die US 6,198,065 B1 weist eine Widerstandsschweißvorrichtung mit zustellbaren Elektroden auf. Für die Elektrodenzustellung sind Pneumatikzylinder mit besonderen Gleitdichtungen vorgesehen, die sich von früher verwendeten Rollmembranzylindern unterscheiden.

Die DE 296 06 375 U1 befasst sich ebenfalls mit einer Laserschweißeinrichtung der eingangs genannten Art, wobei ein Laserschweißkopf und eine Andrückrolle an einem im Gestell verfahrbaren Schlitten angeordnet sind, der von einer Feder beaufschlagt wird.

Es ist daher Aufgabe der vorliegenden Erfindung, eine bessere rcbotertaugliche Bearbeitungseinrichtung aufzuzeigen.

Die Erfindung löst diese Aufgabe mit den Merkmalen im Hauptanspruch.
Der Rollmembranzylinder hat den Vorteil, dass er nicht die von konventionellen Pneumatikzylindern bekannte Krafthysterese besitzt und eine sehr feine Kraftdosierung ermöglicht. Hierbei können außerdem Stick-Slip-Effekte vermieden werden.

Der Stellantrieb kann mehrere Rollmembranzylinder aufweisen, wobei diese auch entgegengesetzte Wirkrichtungen haben können. Hierbei kann z.B. mit dem einen Rollmembranzylinder eine Andrückkraft oder Senkkraft und mit dem anderen Rollmembranzylinder eine Rückholkraft oder Hebekraft erzeugt werden. Durch entsprechende Ansteuerung oder Regelung beider Rollmembranzylinder kann der Einfluss des Eigengewichts der beweglichen Einrichtungsteile auf die Andrückkraft vollständig kompensiert werden.

Der oder die Rollmembranzylinder werden vorzugsweise mit Druckluft beaufschlagt und können über eine geeignete Ventilsteuerung sehr genau gesteuert und positioniert werden. Hierbei können auch Bahnabweichungen, insbesondere Höhenabweichungen, kompensiert werden. Der oder die Rollmembranzylinder können insbesondere auf eine konstante Kraft in den unterschiedlichen Auszugsstellungen geregelt werden. Dies ist für Qualität und Genauigkeit der ausgeführten Prozesse, insbesondere eines Laserschweißprozesses, von Vorteil.

Die Bearbeitungseinrichtung besitzt eine Andrückvorrichtung und eine Zustellvorrichtung mit einem Stellelement, z.B. einem Stellschlitten, und einer Schlittenführung, z.B. einer Schlittenschiene. Die Bearbeitungseinrichtung kann eine gesteuerte Klemmeinrichtung zum Festsetzen des Stellelementes außerhalb der Betriebs- und Prozesszeiten aufweisen. Die Klemmeinrichtung kann z.B. bei Abschalten der Fluidversorgung für den oder die Rollmembranzylinder automatisch einfallen und das Stellelement fixieren. Hierdurch können eine Fehlbedienung und eine ungünstige Belastung des oder der Rollmembranzylinder vermieden werden. Die steuerbare Klemmeinrichtung kann außerdem gezielt zum Überbrücken von Applikationsbereichen eingesetzt werden, bei denen keine Andrückkraft auf das Werkstück ausgeübt werden soll, z.B. am Endbereich der Bearbeitungsbahn, bei Umorientierungen oder dgl..

Die Bearbeitungseinrichtung kann ferner ein Sicherungselement zur Vermeidung von Unterdruck auf der Druckseite des oder der Rollmembranzylinder besitzen. Hierdurch kann z.B. bei Bedarf ein Druckausgleich durch Zuführung von Umgebungsluft aus der Atmosphäre stattfinden. Hierdurch kann ebenfalls der oder die Rollmembranzylinder geschützt werden. Bei Entstehen eines Vakuums auf der Druckseite könnte die Rollmembran beschädigt werden.

Bei dem oder den beanspruchten Rollmembranzylinder(n) kann auf ein elastisches Rückstellelement im Zylinder verzichtet werden. Hierdurch muss der Fluiddruck nicht gegen eine Federkraft oder dergleichen arbeiten, die sich zudem über den Kolbenweg erhöht. Der Wegfall der elastischen Rückstellkraft ist für eine Steuerung oder Regelung des oder der Rollmembranzylinder auf konstante Kraft von Vorteil.

Die Bearbeitungseinrichtung besitzt eine Pneumatikeinheit, die mit einer Pneumatikplatte ausgerüstet sein kann, welche ein internes Pneumatikkanalnetz aufweist. Hierdurch kann zu einem großen Teil auf die bisher üblichen externen Pneumatikleitungen oder Schläuche und die damit verbundenen Störkonturen verzichtet werden. Der Montageaufwand wird außerdem verringert. Die Pneumatikplatte hat eigenständige Bedeutung und kann auch in Verbindung mit anderen Bearbeitungseinrichtungen nach dem Stand der Technik und anderen Arten von Pneumatikzylindern eingesetzt werden.

Die Bearbeitungseinrichtung kann ferner eine Führungseinrichtung mit ein oder mehreren optischen Lichtliniengeneratoren aufweisen. Diese können doppelt vorhanden sein und optisch sichtbare Linien in Bewegungsrichtung vor und hinter dem Arbeitspunkt oder der Prozessstelle erzeugen.

Mittels eines Bildaufnehmers, der vorzugsweise durch den Strahlengang eines Laserstrahls auf die Prozessstelle blickt, können die Lichtlinien und deren Brechungsverlauf optisch erfasst und für unterschiedliche Zwecke, z.B. für eine Nahtverfolgung oder eine Prüfung der Schweißnahtqualität oder dergleichen ausgewertet werden.

Die Führungseinrichtung kann bidirektional sein und ohne Umbau oder Umorientierung der Roboterhand einen Betrieb der Bearbeitungseinrichtung in entgegengesetzten Bewegungsrichtungen ermöglichen. Dies erleichtert und beschleunigt den Bearbeitungsprozess. Die Bearbeitungseinrichtung ist hierdurch auch universeller als bisher einsetzbar. Die Führungseinrichtung hat eigenständige erfinderische Bedeutung und kann auch in Verbindung mit konventionellen Bearbeitungseinrichtungen nach dem Stand der Technik eingesetzt werden.

Die Bearbeitungseinrichtung kann ferner am Stellelement, z.B. einem Stellschlitten, einen variablen Schlittenaufbau zur Halterung des Bearbeitungskopfs und weiterer Anbauteile aufweisen, der einen seitenvertauschten Anbau der Teile mit Ausrichtung nach links oder rechts ermöglicht. Der variable Schlittenaufbau erweitert ebenfalls den Einsatzbereich und ermöglicht eine variable Anpassung der Bearbeitungseinrichtung an unterschiedliche Einsatzzwecke. Dies vereinfacht und verbilligt den Gerätepark und die Bevorratung von Ersatz-Bearbeitungseinrichtungen. Auch die vorerwähnte bidirektionale Ausbildung der verschiedenen Kopfteile ist hierfür von Vorteil. Der Anlagenbetreiber braucht nur noch eine einzelne oder einige wenige Bearbeitungsvorrichtungen zum Austausch für Wartungs- oder Störungsfälle oder dergleichen bevorraten. Die Verfügbarkeit wird erhöht. Auch diese Ausbildung des variablen Schlittenaufbaus hat eigenständige erfinderische Bedeutung und lässt sich in Verbindung mit konventionellen Bearbeitungseinrichtungen nach dem Stand der Technik benutzen.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Seitenansicht einer Bearbeitungsstation mit einem Industrieroboter und einer Schweißeinrichtung mit einer Andrückvorrichtung,
- Figur 2:: eine Rückansicht der Schweißeinrichtung von Figur 1,
- Figur 3:: eine Seitenansicht der Schweißeinrichtung gemäß Pfeil III von Figur 2,
- Figur 4:: eine Frontansicht der Schweißeinrichtung von Figur 1 und 2,
- Figur 5:: eine perspektivische Ansicht der Schweißeinrichtung von vorn
- Figur 6:: eine perspektivische Ansicht der Schweißeinrichtung von hinten,
- Figur 7:: eine vergrößerte Darstellung des Andrückbereichs von vorn und
- Figur 8:: eine schematische Darstellung eines Rollmembranzylinders.

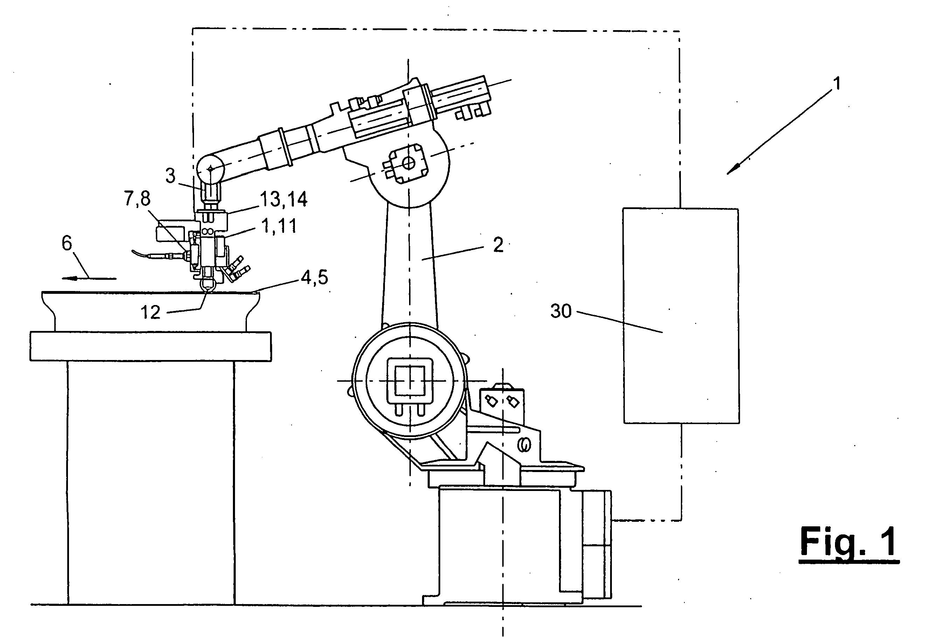

Figur 1 zeigt in einer schematischen Darstellung eine Bearbeitungsstation zur Bearbeitung von ein oder mehreren Werkstücken (4,5) mittels eines mehrachsigen Manipulators (2) und einer vom Manipulator (2) geführten Bearbeitungseinrichtung (1).

Der Bearbeitungsprozess kann von beliebiger Art sein. Im gezeigten Ausführungsbeispiel handelt es sich um einen Laserschweißprozess, wobei die Bearbeitungseinrichtung (1) z.B. als Laserschweißeinrichtung ausgebildet ist. Alternativ kann ein anderer Schweißprozess, z.B. Lichtbogenschweißen, kombiniertes Laser- und Lichtbogenschweißen oder dgl. stattfinden. Möglich sind ferner Schneidprozesse, Oberflächenbearbeitung, wie Gravieren oder dgl. und sonstige beliebige andere Bearbeitungsverfahren. Die Bearbeitungseinrichtung (1) ist dementsprechend unterschiedlich ausgebildet. Die nachfolgenden Erläuterungen beziehen sich auf das Laserschweißen und sind auf andere Bearbeitungsverfahren und Bearbeitungseinrichtungen entsprechend adaptierbar.

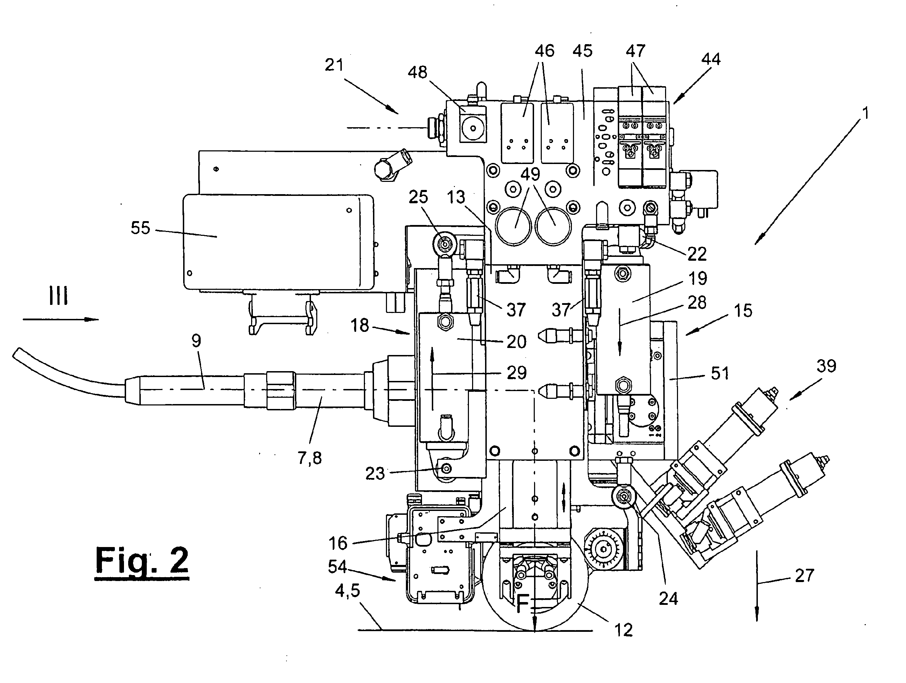

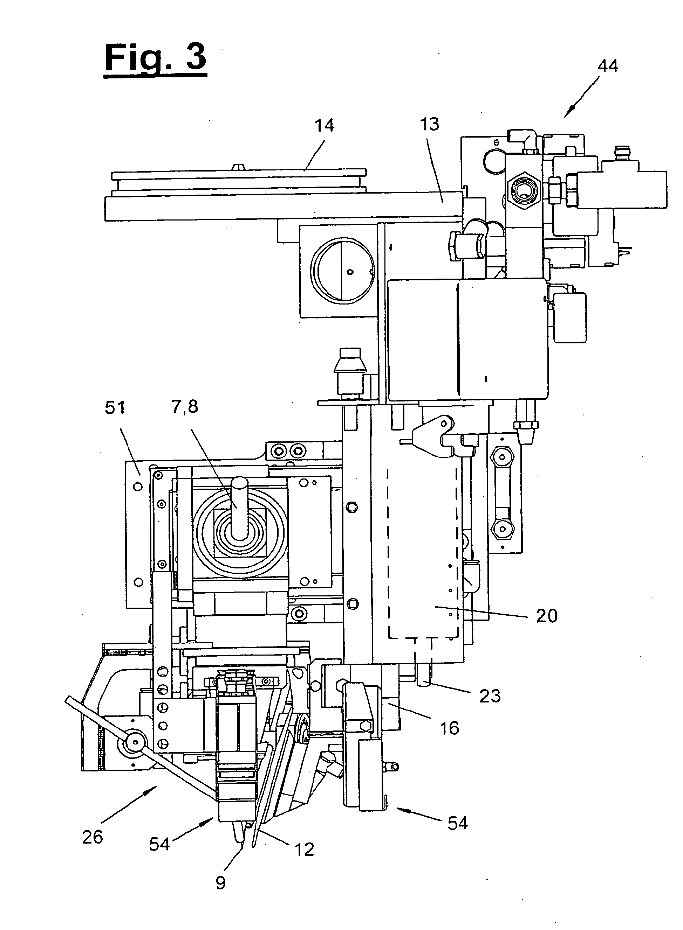

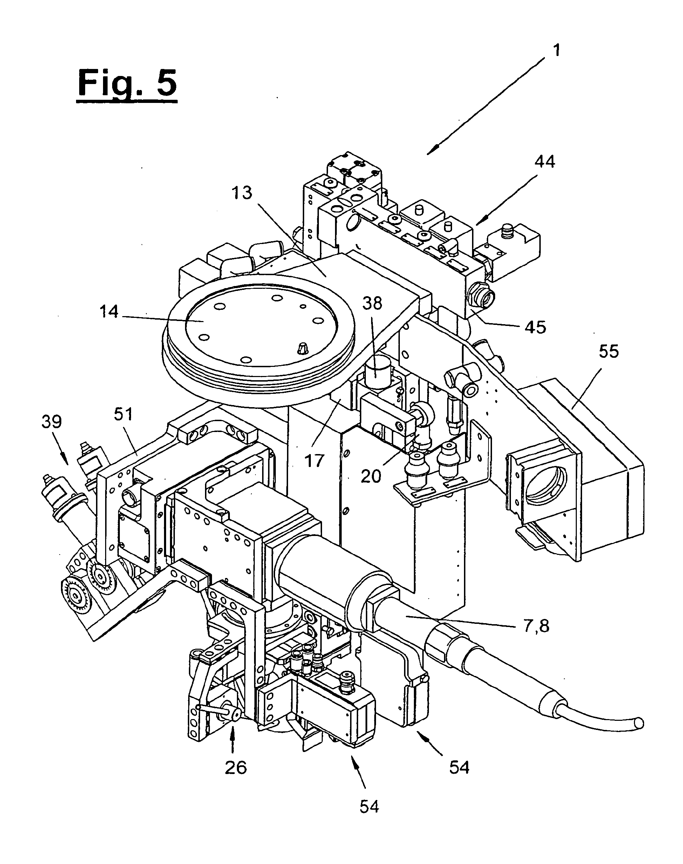

Wie Figur 2 bis 6 verdeutlichen, besitzt die Bearbeitungseinrichtung (1) ein Gestell (13), welches z.B. als Winkelplatte ausgebildet ist. Am Gestell (13) ist ein Anschluss (14), z.B. die gezeigte abgewinkelte Kopfplatte, zur Verbindung mit dem Manipulator (2) vorgesehen. Der Manipulator (2) hat mehrere translatorische und/oder rotatorische Achsen und ist z.B. als sechsachsiger Gelenkarmroboter ausgebildet. Die Bearbeitungseinrichtung (1) ist mit dem Anschluss (14) am Abtriebsflansch der Roboterhand (3) montiert. Der Manipulator oder Industrieroboter (2) kann eine Robotersteuerung (30) aufweisen, die zugleich auch als Prozesssteuerung und als Steuerung für eine Andrückvorrichtung (11) in der Bearbeitungseinrichtung (1) dienen kann. Die zugehörigen Steuer- und Signalleitungen sind in Figur 1 strichpunktiert angedeutet. Alternativ sind getrennte Steuerungen möglich. Insbesondere kann die Andrückvorrichtung (11) eine eigene, schnell reagierende Steuerung und Regelung aufweisen.

Das oder die Werkstücke (4,5) können von beliebiger Art sein. Im gezeigten Ausführungsbeispiel handelt es sich um zwei oder mehr Bleche (4,5), die mit einem Laserstrahl (9) geschweißt werden sollen, wobei z.B. zwischen den Blechen (4,5) ein bestimmter Spalt zum Ausgasen von Beschichtungen eingestellt werden kann. Hierfür hat die Bearbeitungseinrichtung (1) eine Andrückvorrichtung (11), welche mit einer vorbestimmten, einstellbaren und z.B. konstant gehaltenen Andrückkraft F auf das obere Blech (4) drückt. Beim Schweißen wird die Laserschweißeinrichtung (1) z.B. in der Bewegungsrichtung (6) vom Roboter (2) auf den Blechen (4,5) entlang geführt. Mit der Andrückvorrichtung (11) werden hierbei etwaige Lage- oder Werkstücktoleranzen ausgeglichen, wobei der eingestellte Arbeitsabstand des Lasers zum Werkstück (4,5) und die Anpresskraft F konstant gehalten werden können.

Figur 2 bis 7 verdeutlichen die Bearbeitungseinrichtung (1) bzw. Laserschweißeinrichtung in mehreren Seitenansichten und perspektivischen Ansichten. Die Bearbeitungseinrichtung (1) beherbergt einen Bearbeitungskopf (7), der z.B. als Schweißkopf und im gezeigten Ausführungsbeispiel als Laserschweißkopf ausgebildet ist. Er besteht aus einem Bearbeitungswerkzeug, insbesondere einem Laserwerkzeug (8), welches mit einer geeigneten Halterung versehen ist und mindestens einen schematisch angedeuteten Laserstrahl (9) emittiert. Der Laserstrahl kann von einer externen Laserstrahlquelle über die in Zeichnungen angedeutete Leitung, z.B. ein flexibles Lichtleitkabel, dem Laserwerkzeug (8) zugeführt werden. Alternativ kann die Laserstrahlquelle auch an der Bearbeitungseinrichtung (1) angeordnet sein. Der Laserstrahl (9) ist auf einen Arbeits- oder Wirkpunkt (10) am Werkstück (4,5) gerichtet, wo der Laserstrahl (9) auftrifft und der Laserprozess abläuft. Der Arbeitspunkt (10) kann mit dem Fokuspunkt des Laserstrahls (9) zusammenfallen. Der Fokuspunkt kann alternativ über oder unter dem Arbeitspunkt (10) liegen.

Die Andrückvorrichtung (11) besitzt mindestens ein Andrückelement (12), welches benachbart zum Wirkpunkt (10) am Werkstück (4,5) angreift. Das Andrückelement (12) kann z.B. die in den Zeichnungen dargestellte einzelne und frei drehbare Andrückrolle sein. Alternativ kann eine Doppelrollenanordnung vorhanden sein, wobei die Werkstücke (4,5) zwischen den beiden gegenüberliegenden Rollen eingespannt sind. In weiterer Abwandlung kann das Andrückelement (12) ein Andrückfinger oder ein beliebiges anderes Element sein. Die Ausgestaltungen können beliebig und z.B. gemäß der WO 97/37808, DE 201 03 411 U1 oder DE 201 11 394 U1 sein.

Die Andrückvorrichtung (11) besteht aus starren und beweglichen Teilen. Der starre Teil ist das mit der Roboterhand (3) verbundene Gestell (13). Das bewegliche Teil ist ein Stellelement (16), an dem der vorerwähnte Bearbeitungskopf (7) bzw. das Bearbeitungswerkzeug (8) und das Andrückelement (12) mittels geeigneter Halterungen angeordnet sind. Das Stellelement (16) ist z.B. als ein in den Zeichnungen dargestellter, linear mittels einer Schlittenführung (17) verfahrbarer Stellschlitten ausgebildet. Die Schlittenführung (17) kann z.B. am Stellschlitten (16) angeordnet sein. Alternativ kann das Stellelement (16) eine rotatorische Achse haben und als Schwenkhebel ausgebildet sein. Daneben sind weitere beliebige Ausgestaltungen und Achskonfigurationen möglich.

Das Stellelement (16) wird relativ zum Gestell (13) mittels eines Stellantriebs (18) entlang der Schlittenschiene (17) bewegt. Der Stellantrieb (18) kann zwischen den parallelen Plattenkörpern des Gestells (13) und des Stellelements (16) angeordnet sein.

Der Stellantrieb (18) weist mindestens einen Rollmembranzylinder (19,20) auf, welcher z.B. seitlich neben der Schlittenführung (17) angeordnet und parallel zu dieser ausgerichtet ist. Der Rollmembranzylinder (19,20) kann einseitig oder beidseitig mit einem Fluid unter Druck, z.B. durch Druckluft beaufschlagt werden.

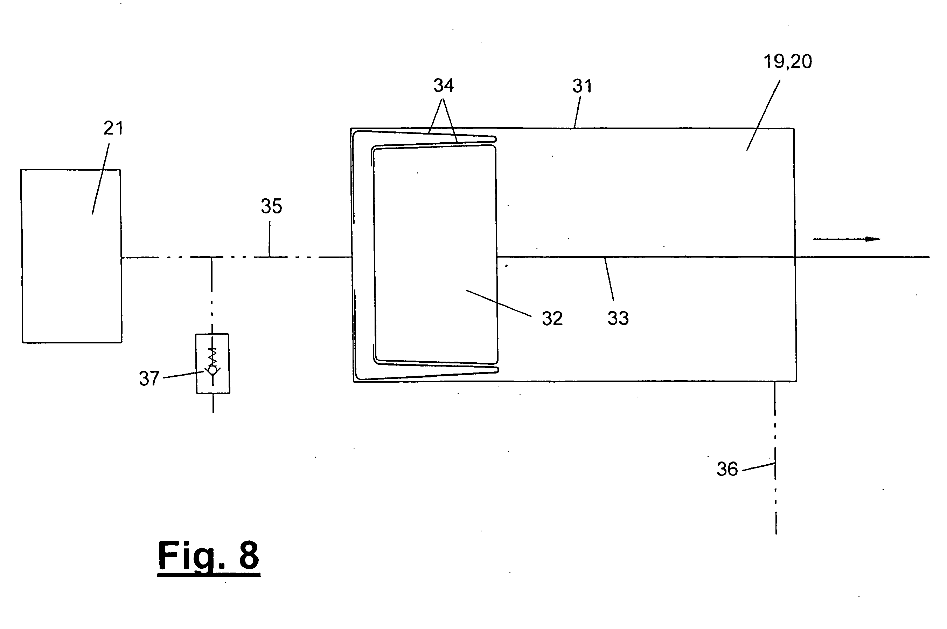

Figur 8 zeigt den schematischen Aufbau eines Rollmembranzylinders (19,20) mit einseitiger Druckluftbeaufschlagung. Er besteht aus einem Zylinderrohr (31), in dem ein Kolben (32) mit einer einseitig angebrachten Kolbenstange (33) längsbeweglich geführt und mit der Kolbenstange (33) im Zylinderboden gelagert ist. Der Kolben (32) ist mittels einer Rollmembran (34) im Zylinderrohr (31) reibungs- und widerstandsarm gelagert. Die Rollmembran (34) hat eine schlauchartige und gefaltete Form, wobei sie mit dem einen Rand am Kolben (32), z.B. an dem von der Kolbenstange (33) abgewandten druckseitigen Kolbenboden befestigt ist. Der andere Rand ist am Zylinderrohr (31), z.B. am druckseitigen Zylinderboden, befestigt. Die Rollmembran (34) ist in einem umfangsseitigen Freiraum zwischen dem Mantel des Kolbens (32) und dem Mantel des Zylinderrohrs (31) in gefalteter Form eingebracht. Hierdurch wälzt sich die Rollmembran (34) bei den axialen Kolbenbewegungen (32) im Freiraum und auf dem Kolbenmantel ab. Der Kolben (32) ist radial über die hochflexible Rollmembran (34) geführt. Bei einem beidseitig beaufschlagten Kolben (32) sind zwei Rollmembranen beidseits des Kolbens angeordnet.

Der Kolben (32) kann im Rollmembranzylinder (19,20) in Vorschubrichtung frei beweglich und ohne elastisches Rückstellelement geführt sein. Insbesondere kann auf eine dem Fluiddruck entgegenwirkende Rückstellfeder auf der anderen Kolbenseite und in der dortigen Zylinderkammer verzichtet werden. Dies ist für eine Regelung des Rollmembranzylinders (19,20) auf konstante Kraft von Vorteil.

Am druckseitigen Zylinderboden ist eine Zuleitung (35) angeschlossen, die mit einer Fluidversorgung (21), insbesondere einer Druckluftversorgung, verbunden ist. Auf der anderen Kolbenseite weist das Zylinderrohr (31) eine Ableitung (36) auf, durch welche bei der Kolbenbewegung die in der Zylinderkammer vorhandene Luft verdrängt wird und entweichen kann.

Am Rollmembranzylinder (19,20) oder an der Zuleitung (35) kann ein Sicherungselement (37) angeordnet sein, mit dem die Entstehung eines Unterdrucks auf der Druckseite des Kolbens (32) vermieden werden kann. Das Sicherungselement (37) kann hierfür in beliebig geeigneter Weise ausgebildet sein. Im gezeigten Ausführungsbeispiel ist es als Ventil, insbesondere als Rückschlagventil, mit Verbindung zur Atmosphäre ausgebildet. Wenn z.B. durch eine externe Kraft die Kolbenstange (33) und der Kolben (32) ausgezogen werden und in der Druckkammer des Zylinders die Gefahr eines Unterdrucks entsteht, öffnet das Sicherungselement (37) und lässt aus der Atmosphäre Luft in die Zuleitung (35) und in die druckseitige Zylinderkammer für einen Druckausgleich einströmen. Das Ventil (37) hat hierfür bevorzugt eine niedrige Schaltschwelle zwischen 0 und 0,5 bar. Vorzugsweise liegt die Schaltschwelle zwischen 0,03 und 0,05 bar.

Die Zustellvorrichtung (15) kann eine Sicherungseinrichtung zur Fixierung des Stellelementes (16) aufweisen, die z.B. bei abgeschalteter Fluidversorgung (21) tätig wird. Die Sicherungseinrichtung kann z.B. eine Klemmeinrichtung (38) aufweisen, die an der Schlittenführung (17) angeordnet ist und die die Schlittenbewegung blockiert. Die Klemmeinrichtung (38) kann steuerbar sein und an die Fluidversorgung (21) angeschlossen sein. Sie kann mit ein oder mehreren Spannfedern ausgerüstet sein, welche bei Abfall des Fluiddrucks und bei Deaktivierung des oder der Rollmembranzylinder (19,20) die Klemmung schließt. Wenn der Fluiddruck aufgeschaltet wird, werden in der vorzugsweise beidseits der Schlittenführung (17) angeordneten Klemmeinrichtung (38) die Spannfedern zurück gedrängt und die Klemmung aufgehoben. Durch diese Ausbildung fällt die Klemmeinrichtung (38) bei Störungen, Betriebsabschaltungen oder dergleichen selbsttätig ein und sichert die Lage des Stellelements (16) und des oder der Rollmembranzylinder (19,20).

Der Stellantrieb (18) kann einen einzelnen Rollmembranzylinder (19,20) aufweisen, welcher je nach Größe der gewünschten Andrückkraft F angeordnet und gesteuert ist. Bei der in Figur 2 gezeigten Werkstückausrichtung ist die Zustellrichtung (27) der Andrückeinrichtung (11) senkrecht und im wesentlichen normal zur Werkstückoberfläche ausgerichtet. Bei dieser Ausrichtung wirkt das Eigengewicht der beweglichen Teile, insbesondere des Stellelements (16), des Bearbeitungskopfs (7) und des Andrückelementes (12) mit seiner Halterung mit. Wenn z.B. die gewünschte Andrückkraft F kleiner als das Eigengewicht dieser beweglichen Teile ist, genügt die Anordnung eines einzelnen Rollmembranzylinders (20), welcher eine dem Eigengewicht und der Zustellrichtung (27) entgegen gesetzte Wirkrichtung (29) aufweist und das Eigengewicht der bewegten Teile im gewünschten Maß reduziert. Wenn die gewünschte Andruckkraft F größer als das besagte Eigengewicht der beweglichen Teile ist, kann der andere Rollmembranzylinder (19) eingesetzt werden, welcher eine in Zustellrichtung (27) weisende Wirkrichtung (28) hat und zusätzlich zum Eigengewicht wirkt.

Alternativ ist es möglich, zwei gegeneinander wirkende Rollmembranzylinder (19,20) einzusetzen, die z.B. beidseits der Schlittenführung (17) parallel angeordnet und in Figur 2 bis 7 dargestellt sind. Sie können im Betrieb einzeln oder gemeinsam angesteuert werden. Bei einer Einzelansteuerung können die vorerwähnten Funktionen mit der Einstellung der Andrückkraft F, die wahlweise kleiner oder größer als das Eigengewicht der beweglichen Teile ist, erzielt werden. Alternativ kann der hebende Rollmembranzylinder (20) in seiner Kraftwirkung (29) derart eingestellt und dosiert werden, dass das Eigengewicht der beweglichen Teile kompensiert wird. Der zweite in Zustellrichtung (27) wirkende Rollmembranzylinder (19) entwickelt eine höhere und entgegengesetzte Kraft als der erste Rollmembranzylinder (20), so dass die resultierende Kraftkomponente bzw. die Differenzkraft die Andrückkraft F darstellt. Beide Rollmembranzylinder (19,20) können hierzu entsprechend von der Steuerung (30) gesteuert und geregelt werden.

Mit einer Doppelanordnung von Rollmembranzylindern (19,20) sind auch Einstellungen der gewünschten Andrückkraft F bei unterschiedlichen räumlichen Ausrichtungen der Bearbeitungseinrichtung (1) möglich. Wenn die Bearbeitungseinrichtung (1) z.B. abweichend von Figur 1 horizontal vom Roboter (2) gehalten wird, hat das Eigengewicht der beweglichen Teile der Andrückvorrichtung (11) keinen unmittelbar wirkenden Einfluss auf die Andrückkraft F. Allenfalls geht das Eigengewicht über Reibkräfte ein. In diesem Fall kann die Hebewirkung und Gewichtskompensation des einen Rollmembranzylinders (20) entsprechend reduziert werden, wobei auch die Kraftwirkung des zweiten Rollmembranzylinder (19) entsprechend verringert werden kann, so dass in der Differenz die gewünschte Andrückkraft F erhalten bleibt. Bei Schräglagen der Bearbeitungseinrichtung (1) wird die in Andrück- oder Zustellrichtung (27) wirkende Eigengewichtskomponente entsprechend durch Ansteuerung beider Rollmembranzylinder (19,20) kompensiert. Wenn die Bearbeitungseinrichtung (1) nach oben gerichtet wird und das Eigengewicht der beweglichen Teile gegen die Zustellrichtung (27) wirkt, kann der hebende Rollmembranzylinder (20) abgeschaltet werden, wobei nur der in Zustellrichtung (27) wirkende zweite Rollmembranzylinder (19) mit entsprechend höherer Kraft angesteuert wird. Es kompensiert dann die entgegengerichtete Eigengewichtskomponente und erzeugt die gewünschte Andrückkraft F. Auch in diesem Fall kann je nach Winkelausrichtung und dementsprechender Größe der Eigengewichtskomponente die Ansteuerung und die Kraftwirkung dieses Rollmembranzylinders (19) variieren.

In weiterer Abwandlung der gezeigten Ausführungsform können die Rollmembranzylinder (19,20) jeweils mehrfach vorhanden sein. Ferner können ein oder mehrere beidseitig wirkende Rollmembranzylinder vorhanden sein.

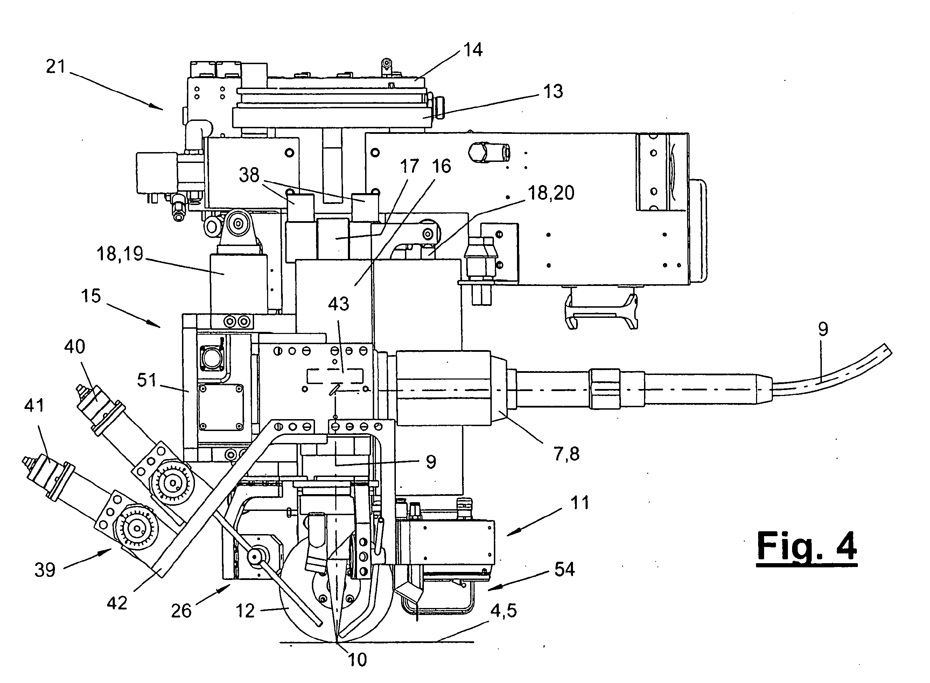

Wie eingangs angesprochen, sind die Rollmembranzylinder (19,20) parallel zur Zustellrichtung (27) und zur Schlittenschiene (17) ausgerichtet. Sie sind dabei durch gelenkige Anschlüsse (22,23) mit dem Gestell (13) und durch gegenüberliegende Anschlüsse (24,25) mit dem Stellelement (16) bzw. dem Stellschlitten verbunden. Bei dem in Figur 2 linken Rollmembranzylinder (20) mit der hebenden Kraftwirkung (29) ist der untere Anschluss (23) zur Befestigung des Rollmembranzylinders (20) dem Gestell (13) zugeordnet und der obere Anschluss (25) weist zum Stellschlitten (16). Figur 2 und 4 zeigen diese Anordnung von vorn und hinten und verdeutlichen, dass die Anschlüsse (22,24) jeweils in den Freiraum zwischen den parallelen Platten des Schlittens (16) und des Gestells (13) mit Querausrichtung greifen.

Bei der in Figur 2 durch Pfeile angedeuteten Expansion fährt die Kolbenstange (33) des Rollmembranzylinders (20) und schiebt über den oberen Anschluss (25) das Stellelement (16) nach oben gemäß des Wirkrichtungpfeils (29). Der andere Rollmembranzylinder (19) ist an seinem oberen Anschluss (22) mit dem Gestell (13) und an seinem unteren Anschluss (24) mit dem Stellelement oder Schlitten (16) verbunden. Figur 2 und 4 verdeutlichen diese Anordnung. Die Betätigung und Expansion des Rollmembranzylinders (19) hat ein Absenken des Stellelements (16) in Zustellrichtung (27) und die durch den Pfeil (28) verdeutlichte Wirkrichtung zur Folge.

Die Fluidversorgung (21) ist vorzugsweise als Druckluftversorgung oder Pneumatikversorgung ausgeführt und kann in beliebig geeigneter Weise ausgebildet sein. Sie besteht z.B. aus einer Fluid- oder Druckluftquelle (nicht dargestellt), die z.B. extern in der Bearbeitungsstation angeordnet ist. Bei den weiteren Erläuterungen wird auf die nachstehend geschilderte Ausführungsform von Druckluft als Fluid Bezug genommen. Die Offenbarung gilt entsprechend auch für andere zum Betrieb von ein oder mehreren Rollmembranzylindern (19,20) geeignete Fluide.

An der Bearbeitungseinrichtung (1) ist eine Pneumatikeinheit (44) am Gestell (13) angeordnet, die über eine in Figur 2 schematisch angedeutete Leitung mit besagter Druckluftquelle verbunden ist. Die Pneumatikeinheit (44) dient zur Druckversorgung und zur Steuerung sowie ggf. auch zur Regelung des oder der Rollmembranzylinder (19,20). Der oder die Rollmembranzylinder (19,20) sind hierbei z.B. auf eine über dem Weg konstante Kraft geregelt. Von der Pneumatikeinheit (44) können auch ein oder mehrere andere Verbraucher an der Bearbeitungseinrichtung (1) mit Druckluft versorgt und ggf. auch gesteuert bzw. geregelt werden.

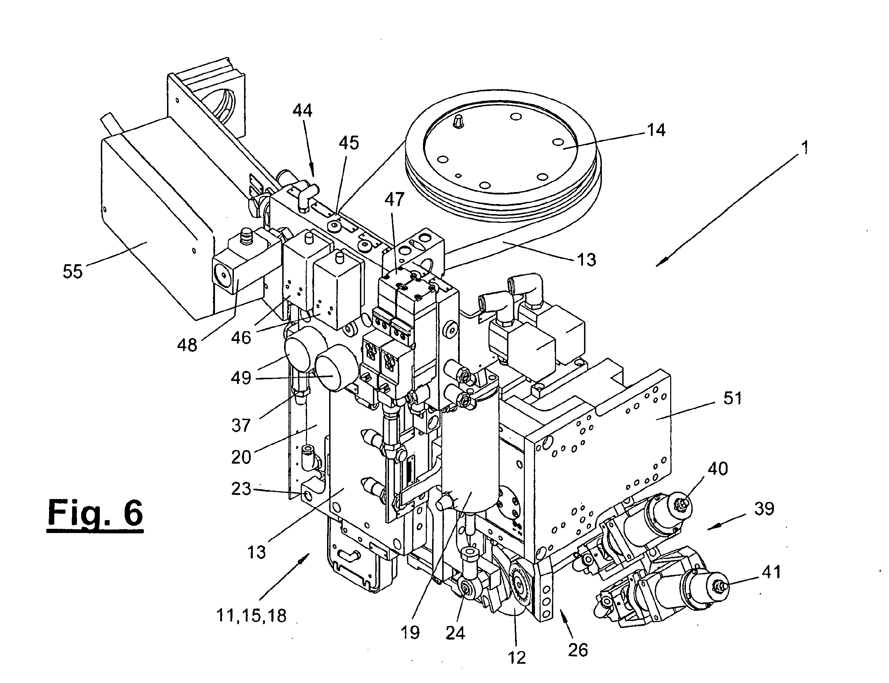

Die Pneumatikeinheit (44) weist eine am Gestell (13) befestigte Pneumatikplatte (45) auf. Diese besitzt eine Vielzahl interner Bohrungen und Kanäle zur Bildung eines internen Pneumatikkanalnetzes. Externe Leitungsführungen können hierdurch weitgehend reduziert und eingespart werden. An der Pneumatikplatte (45) sind die zur Steuerung bzw. Regelung und zur Druckluftversorgung des oder der Rollmembranzylinder (19,20) und eventuell weiterer Komponenten angebaut. Zur Drucksteuerung und ggf. Kraftregelung des oder der Rollmembranzylinder (19,20) sind ein oder mehrere geeignete Ventile, z.B. die in der Zeichnung dargestellten zwei Proportionsventile (46) vorhanden. Ferner können ein oder mehrere weitere Ventile, z.B. die gezeigten zwei Schaltventile (47) an der Pneumatikplatte (45) angebaut sein. Ferner gibt es ein oder mehrere Druckschalter (48) sowie ein oder mehrere Druckanzeigen (49). Außerdem sind ein oder mehrere externe Leitungsanschlüsse vorhanden, um die Leitungsverbindung zu dem oder den Rollmembranzylinder(n) (19,20), zu einem eventuell vorhandenen Cross-Jet (50) und zu weiteren Komponenten zu ermöglichen. Hier werden elastische Schläuche angeschlossen. Die beschriebene Pneumatikeinheit (44) ist z.B. in Figur 2 und 6 dargestellt.

Wenn während des Bearbeitungsprozesses die programmierte Bahn des Roboters (2) und der mitgeführten Bearbeitungseinrichtung (1) von der Ist-Lage des oder der Werkstück(e) (4,5) abweicht, führen die Andrückvorrichtung (11) und ihre Zustellvorrichtung (15) eine entsprechende Ausweichbewegung oder Stellbewegung aus, wobei die Andrückkraft F in der gewünschten Größe eingestellt wird und ggf. über eine Regelung konstant gehalten wird.

Wenn z.B. das obere Werkstück (4) und der Wirkpunkt (10) höher als die programmierte Bahn liegen, weicht der Schlitten (16) nach oben aus, wobei die beiden Rollmembranzylinder (19,20) die Bewegung entsprechend mitmachen und dabei die entwickelte Kraft im wesentlichen konstant halten. Liegt das Werkstück (4) tiefer als die programmierte Bahn, findet eine absenkende Ausgleichsbewegung mit entsprechender Reaktion der Rollmembranzylinder (19,20) statt.

Die Bearbeitungseinrichtung (1) kann eine Führungseinrichtung (39) aufweisen, die z.B. zur Nahtverfolgung dient. Die Führungseinrichtung (39) kann unidirektional für eine einzige Bewegungsrichtung (6) oder bidirektional für eine vorwärts und rückwärts gerichtete Bewegungsrichtung ausgelegt sein. Sie weist ein oder mehrere, z.B. die in den Zeichnungen dargestellten zwei Liniengeneratoren (40,41) auf, die im Bereich der Arbeitsstelle (10) ein oder mehrere optisch erkennbare Linien erzeugen. Die Liniengeneratoren (40,41) können z.B. Lasereinrichtungen sein, die jeweils mindestens eine optisch sichtbare Lichtlinie produzieren. Die Liniengeneratoren (40,41) sind an geeigneter Stelle im Bereich des Bearbeitungskopfs (7) angeordnet und werden mit diesem mitbewegt. Sie können z.B. beide an einer Seite des Bearbeitungskopfs (7) bzw. des Arbeitspunkts (10) angeordnet sein und in die gleiche Richtung strahlen. Die Liniengeneratoren (40,41) sind z.B. über eine verstellbare Halterung (42) am Bearbeitungskopf (7), z.B. an einem dortigen Schlittenaufbau (51), angeordnet.

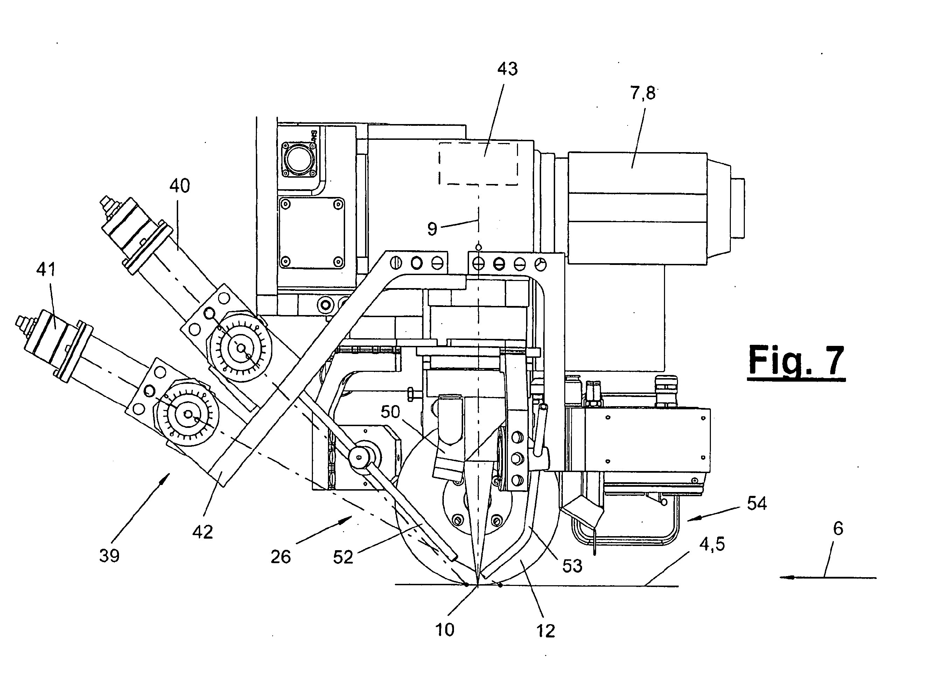

Die Linien sind quer oder schräg zur Bewegungsrichtung (6) ausgerichtet und werden an einer den Nahtverlauf repräsentierenden Werkstückkante gebrochen. Dies kann z.B. eine Stufe, ein Radius oder eine sonstige markante Geometrie an einem Werkstück (4,5) sein. In der in Figur 7 abgebrochenen und vergrößert dargestellten Ausführung von Figur 4 ist erkennbar, dass für eine bidirektionale Ausbildung der eine Liniengenerator (40) eine Lichtlinie in Bewegungsrichtung (6) vor dem Arbeitspunkt (10) und der andere Liniengenerator (41) eine Lichtlinie hinter dem Arbeitspunkt (10) erzeugt. Die beiden Liniengeneratoren (40,41) können gemeinsam oder getrennt betrieben werden. Bei dem dargestellten Schweißprozess in Bewegungsrichtung (6) dient der eine Liniengenerator (40) mit der vorderen Lichtlinie zur Nahtsuche. Mit der hinteren Lichtlinie kann die produzierte Schweißnaht bei Bedarf überprüft werden. Der Liniengerator (41) strahlt hierbei ggf. durch den Prozessbereich hindurch. Bei einer Umkehr der Bewegungsrichtung wird die Generatorenzuordnung umgedreht und der Liniengenerator (41) dient zur Nahtsuche. Im Prozessbetrieb kann alternativ nur der zur Nahtsuche benutzte Liniengenerator (40,41) eingeschaltet sein.

Die Führungseinrichtung (39) beinhaltet ferner einen Bildaufnehmer (43) zur Beobachtung der Prozessstelle und des Bereichs um den Arbeitspunkt (10). Der Bildaufnehmer (43) kann z.B. eine digitale Kamera mit einem CCD-Sensor oder mit einer anderen Ausbildung sein. Der Bildaufnehmer (43) kann in die Optik des Bearbeitungskopfes (7) eingebaut sein und in Richtung des zum Arbeitspunkt (10) verlaufenden Laserstrahls (9) blicken. In der Optik kann hierfür ein teildurchlässiger Spiegel angeordnet sein, hinter dem der Bildaufnehmer (43) sitzt. Mit dem Bildaufnehmer (43) können ein oder beide der vorerwähnten Lichtlinien zur Nahtsuche und ggf. zur Schweißnahtprüfung beobachtet werden. Außerdem kann die Prozessstelle selbst beobachtet und z.B. auf Prozessgüter über eine Farb- oder Spektralanalyse geprüft werden.

Die Bearbeitungseinrichtung (1) kann ferner eine Gaszuführung (26) für die Zuführung von ein oder mehreren Prozessgasen, insbesondere einem Schutzgas zum Prozessbereich um den Arbeitspunkt (10) aufweisen. Die Gaszuführung (26) kann ebenfalls bidirektional sein. Sie weist entsprechend ein oder zwei Zuführelemente (52,53) auf, die an geeigneter Stelle im Bereich des Bearbeitungskopfs (7) angeordnet sind und mit diesem mitbewegt werden.

In Figur 7 ist ferner eine vor der Optik des Bearbeitungswerkzeugs (8) angeordnete Blaseinrichtung (50), ein sogenannter Cross-Jet, dargestellt. Er emittiert einen quer zum Laserstrahl (9) gerichteten Luftstrom zum Wegblasen von Prozessdämpfen, Schweißspritzern oder dgl..

Die Bearbeitungseinrichtung (1) kann ferner ein oder mehrere weitere Sensoren (54) besitzen, z.B. einen Abstandssensor, einen kantentastenden Sensor, einen Nahtprüfsensor oder dgl.. Der oder die Sensoren (54) können in der Nähe des Arbeitspunktes (10) sowie des Andrückelementes (12) angeordnet sein. Hierüber kann z.B. die Existenz eines Werkstücks (4,5) im Arbeitsbereich der Bearbeitungsvorrichtung (1) überprüft werden. Der oder die Sensoren (54) arbeiten vorzugsweise berührungslos über eine optische, kapazitive oder induktive Messung oder eine sonstig beliebig geeignete physikalische Messmethode.

Die Gaszuführung (26), die Führungseinrichtung (39) und evtl. ein Sensor (54) sind gemeinsam am Stellelement (16) und an dessen Schlittenaufbau (51) angeordnet. Sie werden bei den Schlittenbewegungen mitgeführt. Ein Sensor (54) kann alternativ oder zusätzlich auch gestellfest angeordnet sein. Der Schlittenaufbau (51) besitzt zur Montage- und Positionierung der vorgenannten Komponenten mehrere Beschläge oder Montagewinkel. Der Schlittenaufbau (51) kann modular und variabel ausgeführt sein und einen seitenvertauschten.Anbau der vorgenannten Teile oder des Bearbeitungskopfes (7) ermöglichen. Bei dem seitenvertauschten Anbau kann die bidirektionale Funktion der vorgenannten Komponenten erhalten bleiben.

Am Gestell (13) kann ferner ein Kabelanschluss (55) für den lösbaren Anschluss mindestens eines extern zugeführten Kabels (nicht dargestellt) mit ein oder mehreren, z.B. elektrischen Leitungen zur Energieversorgung, für den Austausch von Steuersignalen etc., vorhanden sein.

Die vorstehend beschriebene Führungseinrichtung (39), insbesondere die Anordnung mit den Liniengeneratoren (40,41) und dem Bildaufnehmer, haben eigenständige Bedeutung und kann auch in Verbindung mit anderen konventionellen Bearbeitungseinrichtungen, Andrück- und Zustellvorrichtungen sowie Stellantrieben eingesetzt werden.

Abwandlungen der gezeigten und beschriebenen Ausführungsbeispiele sind in verschiedener Weise möglich. Dies betrifft die konstruktive Ausgestaltung der Bearbeitungseinrichtung (1), ihrer Andrückvorrichtung (11) und der weiteren Komponenten. Die Merkmale der beschriebenen Ausführungsformen können außerdem in beliebiger Weise miteinander kombiniert und ausgetauscht werden.

In Variation der gezeigten Ausführungsbeispiele können ein oder mehrere Rollmembranzylinder (19,20) statt über starre Anschlüsse (22,23,24,25) über Schwenkhebel mit dem Gestell (13) und/oder dem Stellelement (16) verbunden sein. Die Gestaltung und Anordnung der Rollmembranzylinder (19,20) kann sich außerdem in Anpassung an die konstruktive Gestaltung des Gestells (13) und des Stellelements (16) ändern, insbesondere wenn das Stellelement (16) als Schwenkhebel mit einer gestellfesten Schwenkachse ausgebildet ist. Wenn z.B. eine zweite Andrückrolle zum beidseitigen Einspannen von Blechen vorhanden ist, kann diese ebenfalls mit einem Rollmembranzylinder der beschriebenen Art zugestellt und angedrückt werden.
Darüber hinaus sind weitere beliebige Variationsmöglichkeiten für die Zustellvorrichtung (15) vorhanden. Das Stellelement (16) und die Führung können z.B. als Parallelogrammlenker ausgebildet sein. Weitere Variationen sind auch hinsichtlich der Steuerung (30) des oder der fluidischen Rollmembranzylinder (19,20) möglich, die z.B. separat angeordnet sein kann.

### BEZUGSZEICHENLISTE

1 Bearbeitungseinrichtung, Schweißeinrichtung
2 Manipulator, Industrieroboter
3 Hand, Roboterhand
4 Werkstück, Blech
5 Werkstück, Blech
6 Bewegungsrichtung
7 Bearbeitungskopf, Schweißkopf, Laserschweißkopf
8 Bearbeitungswerkzeug, Laserwerkzeug
9 Laserstrahl
10 Wirkpunkt, Arbeitspunkt, Fokus
11 Andrückvorrichtung
12 Andrückelement, Andrückrolle
13 Gestell
14 Anschluss, Anschlussplatte
15 Zustellvorrichtung
16 Stellelement, Stellschlitten
17 Schlittenführung, Schlittenschiene
18 Stellantrieb
19 Rollmembranzylinder
20 Rollmembranzylinder
21 Fluidversorgung, Pneumatikversorgung
22 Anschluss gestellseitig
23 Anschluss gestellseitig
24 Anschluss schlittenseitig
25 Anschluss schlittenseitig
26 Gaszuführung
27 Zustellrichtung
28 Wirkrichtung
29 Wirkrichtung
30 Steuerung
31 Zylinderrohr
32 Kolben
33 Kolbenstange
34 Rollmembran
35 Zuleitung
36 Ableitung
37 Ventil, Sicherheitsventil
38 Klemmeinrichtung
39 Führungseinrichtung, Nahtverfolgung
40 Liniengenerator
41 Liniengenerator
42 Halterung
43 Bildaufnehmer, Kamera
44 Pneumatikeinheit
45 Pneumatikplatte
46 Ventil, Proportionalventil
47 Ventil, Schaltventil
48 Druckschalter
49 Druckanzeige
50 Cross-Jet
51 Schlittenaufbau
52 Zuführelement
53 Zuführelement
54 Abstandsensor
55 Kabelanschluss

F Andrückkraft

## Patentansprüche

1. Robotertaugliche Bearbeitungseinrichtung (1), insbesondere Schweißeinrichtung, mit einem Bearbeitungskopf (7) und einer Andrückvorrichtung (11) mit mindestens einem Andrückelement (12) und mit einer Zustellvorrichtung (15), die einen Stellantrieb (18) aufweist, wobei die Zustellvorrichtung (15) ein beweglich geführtes Stellelement (16) aufweist, an dem das Andrückelement (12) und der Bearbeitungskopf (7) angeordnet sind, **dadurch gekennzeichnet, dass** der Stellantrieb (18) mindestens einen Rollmembranzylinder (19,20) aufweist.

2. Bearbeitungseinrichtung nach Anspruch 1, **dadurch gekennzeichnet, dass** der Stellantrieb (18) zwei einseitig beaufschlagte Rollmembranzylinder (19,20) mit entgegen gesetzten Wirkrichtungen (28,29) oder einen zweiseitig beaufschlagten Rollmembranzylinder aufweist.

3. Bearbeitungseinrichtung nach Anspruch 1 oder 2, **dadurch gekennzeichnet, dass** der Rollmembranzylinder (19,20) ein Zylinderrohr (31), mindestens einen Kolben (32), mindestens eine Kolbenstange (33) und mindestens eine zwischen Kolben (32) und Zylinderrohr (31) angeordnete Rollmembran (34) aufweist.

4. Bearbeitungseinrichtung nach Anspruch 1, 2 oder 3, **dadurch gekennzeichnet, dass** der Rollmembranzylinder (19,20) auf konstante Kraft gesteuert ist.

5. Bearbeitungseinrichtung nach einem der vorhergehenden Ansprüche, **dadurch gekennzeichnet, dass** der Kolben (32) im Rollmembranzylinder (19,20) in Vorschubrichtung frei beweglich und ohne elastisches Rückstellelement geführt ist.

6. Bearbeitungseinrichtung nach einem der vorhergehenden Ansprüche, **dadurch gekennzeichnet, dass** der Rollmembranzylinder (19,20) oder die Zuleitung (35) der Fluidversorgung (21) mindestens ein Sicherungselement (37) zu Vermeidung von Unterdruck auf der Druckseite des Kolbens (32) aufweist.

7. Bearbeitungseinrichtung nach Anspruch 6 **dadurch gekennzeichnet, dass** das Sicherungselement (37) als Ventil, insbesondere als Rückschlagventil, mit Verbindung zur Atmosphäre ausgebildet ist, wobei das Ventil (37) eine niedrige Schaltschwelle zwischen 0 und 0,5 bar, vorzugsweise zwischen 0,03 und 0,05 bar, aufweist.

8. Bearbeitungseinrichtung nach einem der vorhergehenden Ansprüche, **dadurch gekennzeichnet, dass** das Stellelement (16) als Stellschlitten (16) ausgebildet und mittels einer Schlittenführung (17) an einem Gestell (13) der Andrückvorrichtung (11) gelagert ist.

9. Bearbeitungseinrichtung nach einem der vorhergehenden Ansprüche, **dadurch gekennzeichnet, dass** der oder die Rollmembranzylinder (19,20) zwischen dem Stellelement (16) und dem Gestell (13) angeordnet und mit Anschlüssen (22,23,24,25) endseitig angebunden ist/sind.

10. Bearbeitungseinrichtung nach einem der vorhergehenden Ansprüche, **dadurch gekennzeichnet, dass** zur Einstellung der Andrückkraft F mindestens ein Rollmembranzylinder (19,20) in seiner Kraftsteuerung an das resultierende Gewicht des Stellelements (16) in Zustellrichtung (27) angepasst ist.

11. Bearbeitungseinrichtung nach einem der vorhergehenden Ansprüche, **dadurch gekennzeichnet, dass** der oder die Rollmembranzylinder (19,20) in der Kraftwirkung abhängig von der räumlichen Ausrichtung der Bearbeitungseinrichtung (1) gesteuert ist/sind.

12. Bearbeitungseinrichtung nach einem der vorhergehenden Ansprüche, **dadurch gekennzeichnet, dass** der Stellantrieb (18) eine steuerbare Klemmeinrichtung (38) für das Stellelement (16) aufweist.

13. Bearbeitungseinrichtung nach einem der vorhergehenden Ansprüche, **dadurch gekennzeichnet, dass** die Fluidversorgung (21) eine am Gestell (13) angeordnete und mit einer Steuerung (30) verbundene Pneumatikeinheit (44) aufweist.

14. Bearbeitungseinrichtung nach einem der vorhergehenden Ansprüche, **dadurch gekennzeichnet, dass** der Bearbeitungskopf (7) als Schweißkopf, insbesondere als Laserschweißkopf, und das Andrückelement (12) als Andrückrolle ausgebildet ist.

15. Bearbeitungseinrichtung nach einem der vorhergehenden Ansprüche, **dadurch gekennzeichnet, dass** am Stellschlitten (16) ein variabler Schlittenaufbau (51) zur Halterung der Kopfteile angeordnet und für einen seitenvertauschbaren Anbau ausgelegt ist, wobei der Bearbeitungskopf (7) eine bidirektionale Gaszuführung (26) mit beidseits des Arbeitspunkts (10) angeordneten Zuführelementen (52,53) und eine bidirektionale Führungseinrichtung (39) mit zwei optischen Liniengeneratoren (40,41) und einem in die Optik des Bearbeitungskopf (7) eingespiegelten Bildaufnehmer (43) aufweist.

## Claims

1. Robot-compatible machining device (1), in particular a welding device, with a machining head (7) and a pressure-exerting device (11) with at least one pressure-exerting element (12) and with an infeed device (15), which has an actuating drive (18), the infeed device (15) having a movably guided actuating element (16), on which the pressure-exerting element (12) and the machining head (7) are arranged, **characterized in that** the actuating drive (18) has at least one rolling diaphragm cylinder (19, 20).

2. Machining device according to Claim 1, **characterized in that** the actuating drive (18) has two rolling diaphragm cylinders (19, 20) which are acted on from one side and have opposing directions of effect (28, 29) or one rolling diaphragm cylinder which is acted on from two sides.

3. Machining device according to Claim 1 or 2, **characterized in that** the rolling diaphragm cylinder (19, 20) has a cylindrical tube (31), at least one piston (32), at least one piston rod (33) and at least one rolling diaphragm (34) arranged between the piston (32) and the cylindrical tube (31).

4. Machining device according to Claim 1, 2 or 3, **characterized in that** the rolling diaphragm cylinder (19, 20) is controlled to a constant force.

5. Machining device according to one of the preceding claims, **characterized in that** the piston (32) is guided in the rolling diaphragm cylinder (19, 20) freely movably in the direction of advancement and without a resilient restoring element.

6. Machining device according to one of the preceding claims, **characterized in that** the rolling diaphragm cylinder (19, 20) or the feed line (35) of the fluid supply (21) has at least one securing element (37) to avoid negative pressure on the pressure side of the piston (32).

7. Machining device according to Claim 6, **characterized in that** the securing element (37) is formed as a valve, in particular as a nonreturn valve, in connection with the atmosphere, the valve (37) having a low switching threshold of between 0 and 0.5 bar, preferably between 0.03 and 0.05 bar.

8. Machining device according to one of the preceding claims, **characterized in that** the actuating element (16) is formed as an actuating carriage (16) and is mounted by means of a carriage guide (17) on a framework (13) of the pressure-exerting device (11).

9. Machining device according to one of the preceding claims, **characterized in that** the rolling diaphragm cylinder or cylinders (19, 20) is/are arranged between the actuating element (16) and the framework (13) and is/are connected at the end to connections (22, 23, 24, 25).

10. Machining device according to one of the preceding claims, **characterized in that**, for setting the pressure-exerting force F, at least one rolling diaphragm cylinder (19, 20) is adapted in its force control to the resultant weight of the actuating element (16) in the infeed direction (27).

11. Machining device according to one of the preceding claims, **characterized in that** the rolling diaphragm cylinder or cylinders (19, 20) is/are controlled in terms of the force effect on the basis of the spatial alignment of the machining device (1).

12. Machining device according to one of the preceding claims, **characterized in that** the actuating drive (18) has a controllable clamping device (38) for the actuating element (16).

13. Machining device according to one of the preceding claims, **characterized in that** the fluid supply (21) has a pneumatic unit (44) arranged on the framework (13) and connected to a control (30).

14. Machining device according to one of the preceding claims, **characterized in that** the machining head (7) is formed as a welding head, in particular as a laser welding head, and the pressure-exerting element (12) is formed as a pressure-exerting roller.

15. Machining device according to one of the preceding claims, **characterized in that** a variable carriage structure (51) for mounting the head parts is arranged on the actuating carriage (16) and is designed for attachment on either side, the machining head (7) having a bidirectional gas feed (26) with feeding elements (52, 53) arranged on both sides of the operating point (10) and a bidirectional guiding device (39) with two optical line generators (40, 41) and an image sensor (43) incorporated in the optics of the machining head (7).

## Revendications

1. Dispositif de traitement robotisable (1), en particulier dispositif de soudage, présentant :
une tête de traitement (7) et un ensemble de poussée (11) doté d'au moins un élément de poussée (12) et
un dispositif de positionnement (15) doté d'un entraînement de réglage (18),
le dispositif de positionnement (15) présentant un élément de réglage (16) guidé à déplacement, sur lequel l'élément de poussée (12) et la tête de traitement (7) sont disposés,
**caractérisé en ce que**
l'entraînement de réglage (18) présente au moins un vérin (19, 20) à membrane déroulante.

2. Dispositif de traitement selon la revendication 1, **caractérisé en ce que** l'entraînement de réglage (18) présente deux vérins (19, 20) à membrane déroulante et simple effet dont les sens d'action (28, 29) sont opposés ou un vérin (19, 20) à membrane déroulante et double effet.

3. Dispositif de traitement selon les revendications 1 ou 2, **caractérisé en ce que** le vérin (19, 20) à membrane déroulante présente un tube (31) de vérin, au moins un piston (32), au moins une tige de piston (33) et au moins une membrane déroulante (34) disposée entre le piston (32) et le tube (31) de vérin.

4. Dispositif de traitement selon les revendications 1, 2 ou 3, **caractérisé en ce que** le vérin (19, 20) à membrane déroulante est commandé à force constante.

5. Dispositif de traitement selon l'une des revendications précédentes, **caractérisé en ce que** le piston (32) se déplace librement dans le sens d'avancement dans le vérin (19, 20) à membrane déroulante et est guidé sans élément élastique de rappel.

6. Dispositif de traitement selon l'une des revendications précédentes, **caractérisé en ce que** le vérin (19, 20) à membrane déroulante ou le conduit d'amenée (35) de l'alimentation en fluide (21) présentent au moins un élément de protection (37) qui sert à éviter une dépression sur le côté sous pression du piston (32).

7. Dispositif de traitement selon la revendication 6, **caractérisé en ce que** l'élément protection (37) est configuré comme soupape, en particulier comme soupape antiretour, la soupape (37) présentant un seuil de commutation basse compris entre 0 et 0,5 bar et de préférence entre 0,03 et 0,05 bar.

8. Dispositif de traitement selon l'une des revendications précédentes, **caractérisé en ce que** l'élément de réglage (16) est configuré comme coulisseau de réglage (16) et est monté sur un bâti (13) de l'ensemble de poussée (11) au moyen d'un guide (17) de coulisseau.

9. Dispositif de traitement selon l'une des revendications précédentes, **caractérisé en ce que** le ou les vérins (19, 20) à membrane déroulante sont disposés entre l'élément de réglage (16) et le bâti (13) et sont raccordés à leur ou leurs extrémités par des raccords (22, 23, 24, 25).

10. Dispositif de traitement selon l'une des revendications précédentes, **caractérisé en ce que** pour établir la force de poussée F, la commande de la force d'au moins un vérin (19, 20) à membrane déroulante est adaptée au poids résultant de l'élément de réglage (16) dans la direction de positionnement (27).

11. Dispositif de traitement selon l'une des revendications précédentes, **caractérisé en ce que** la force exercée par le ou les vérins (19, 20) à membrane déroulante est asservie à l'orientation spatiale du dispositif de traitement (1).

12. Dispositif de traitement selon l'une des revendications précédentes, **caractérisé en ce que** l'entraînement de réglage (18) présente un dispositif asservi de serrage (38) pour l'élément de réglage (16).

13. Dispositif de traitement selon l'une des revendications précédentes, **caractérisé en ce que** l'alimentation en fluide (21) présente une unité pneumatique (44) disposée sur le bâti (13) et reliée à une commande (30).

14. Dispositif de traitement selon l'une des revendications précédentes, **caractérisé en ce que** la tête de traitement (7) est configurée comme tête de soudage et en particulier comme tête de soudage par laser et **en ce que** l'élément de poussée (12) est configuré comme galet de poussée.

15. Dispositif de traitement selon l'une des revendications précédentes, **caractérisé en ce qu'**une structure variable (51) de coulisseau est disposée sur le coulisseau de réglage (16) pour maintenir les parties de la tête et est prévue pour être montée indifféremment de chaque côté, la tête de traitement (7) présentant une amenée bidirectionnelle de gaz (26) dotée d'éléments d'amenée (52, 53) disposés des deux côtés du point de travail (10), un dispositif de guidage bidirectionnel (39) doté de deux générateurs de ligne optique (40, 41) et d'un enregistreur d'images (43) couplé par miroir à l'optique de la tête de traitement (7).
